## Europäisches Patentamt

## European Patent Office

## Office européen des brevets

(11) Numéro de publication: **0 125 192**
**B1**

# FASCICULE DE BREVET EUROPÉEN

(12)

(45) Date de publication du fascicule du brevet:
14.10.87

(21) Numéro de dépôt: **84420081.6**

(22) Date de dépôt: **03.05.84**

(51) Int. Cl.⁴: **C 02 F 1/44,** E 04 H 3/20,
B 01 D 13/00

(54) **Appareillage et procédé pour le traitement de l'eau de piscine avec un appareil séparateur à membranes semi-perméables.**

(30) Priorité: **05.05.83 FR 8307741**

(43) Date de publication de la demande:
**14.11.84 Bulletin 84/46**

(45) Mention de la délivrance du brevet:
**14.10.87 Bulletin 87/42**

(84) Etats contractants désignés:
**AT BE CH DE GB IT LI LU NL SE**

(56) Documents cité:
**DE-A-1 955 505**
**DE-A-2 353 469**
**DE-A-2 615 222**
**DE-A-2 941 164**
**FR-A-2 430 451**

(73) Titulaire: **RHONE- POULENC CHIMIE, 25, quai Paul Doumer, F-92408 Courbevoie Cédex (FR)**

(72) Inventeur: **Ancelle, Bernard, 52, rue Saint- Mathieu, 69008 Lyon (FR)**
Inventeur: **Lambert, Serge, 69, Chemin des Esses, F-69370 Saint- Didier- au- Mont- d'Or (FR)**

(74) Mandataire: **Vogt, Bernard, RHONE- POULENC INTERSERVICES Service Brevets Chimie Centre de Recherches de Saint- Fons B.P. 62, F-69192 Saint- Fons Cédex (FR)**

## Description

La présente invention, concerne un appareillage et un procédé pour le traitement des eaux de piscine.

Les traitements des eaux de piscines se font actuellement en faisant passer continuellement une partie de l'eau du bassin de la piscine, après une purification grossière pour en éliminer les matières telles que par exemple les cheveux, soit sur des filtres à sable, soit sur des filtres à diatomées, puis l'eau ainsi traitée retourne alors dans le bassin après qu'on lui ait ajouté un produit chimique tel que du chlore, du bioxyde de chlore, du brome, de l'iode, de l'ozone... pour la désinfecter.

Les filtres à sables utilisés comportent soit une couche de sable de granulométrie constante, soit plusieurs couches (généralement 4 à 5) de sable de granulométrie décroissante, la couche de sable de granulométrie la plus grosse correspondant à celle par laquelle sort l'eau traitée. Pour obtenir une eau claire il est indispensable d'ajouter un floculant à l'eau devant être traitée, car le sable ne retient pas les particules de diamètre inférieur à 15 ou 20 microns. Comme floculant on utilise du sulfate d'alumine ou des chlorures d'aluminium moins tributaires du pH. Cependant, malgré des lavages à contre-courant répétés, l'eau arrive à passer par des chemins préférentiels. Il faut alors utiliser un produit détartrant spécial.

Les filtres à diatomées sont de plusieurs types. Certains sont à décolmatage automatique, d'autres sans décolmatage automatique et à alluvionnage continu. Les diatomées, étant broyées très finement, peuvent retenir les particules allant jusqu'à 1 micron de diamètre. En contre-partie la finesse des interstices provoque un colmatage rapide. Celui-ci est ralenti par une limitation de la vitesse de filtration. Cependant les toiles demandent un entretien régulier, le tartre étant éliminé par un produit spécifique et le gras par un produit basique.

A la suite de cette filtration sur filtres à sable ou sur filtres à diatomées, il est indispensable de désinfecter l'eau. Pour cela on procède à des traitements chimiques ou à des traitements physiques. Les traitements chimiques sont généralement à base de chlore, de brome, d'iode, d'ozone ou de préférence de bioxyde de chlore. Les traitements physiques sont à base de rayons ionisants ou de rayons ultraviolets.

Un but de la présente invention est un procédé et un appareillage pour le traitement des eaux de piscines qui ne présentent pas les inconvénients des procédés et appareillages de l'art antérieur.

Un but de la présente invention est un procédé et un appareillage de grande fiabilité, utilisables de façon manuelle ou automatique, de grande souplesse de fonctionnement.

Un autre but de la présente invention est un procédé et un appareillage assurant une meilleure sécurité du traitement des eaux de piscines, notamment au niveau bactériologique.

Un autre but de la présente invention est un procédé et un appareillage faciles à mettre en oeuvre.

Un autre but de la présente invention est un procédé et un appareillage permettant de ne pas polluer l'environnenent.

Un autre but de la présente invention est un procédé et un appareillage permettant de réaliser des économies d'énergie.

Un autre but de la présente invention est un procédé et un appareillage permettant de s'affranchir des dispositifs classiques de filtration sur sables ou sur diatomées.

Un autre but de la présente invention est un procédé et un appareillage permettant de supprimer, au moins en partie, les traitements chimiques de désinfection.

Un autre but de la présente invention est un procédé et un appareillage permettant, par unité de temps (heure par exemple), de traiter de plus faibles quantités de l'eau contenue dans le bassin des piscines tout en assurant un parfait état de l'eau du bassin.

En ce qui concerne l'art antérieur, le document le plus proche du domaine revendiqué ci-après consiste en le DE-A-2 615 222, mais ce document, qui se rapporte à un procédé pour la récupération d'eau de bains médicinaux, décrit un procédé et un appareil différents dans leur fonction et dans leur structure.

Il a donc maintenant été trouvé et c'est ce qui fait l'objet de la présente invention un procédé de traitement de l'eau contenue dans le bassin de piscine, notament de piscine municipale, caractérisé en ce que l'on soutire en continu l'eau (1) dudit bassin (2) pour l'envoyer dans un bac (5) de recyclage, en ce que l'on soutire l'eau dudit bac (5) pour l'envoyer au contact des membranes (12) semi-perméables d'un appareil séparateur (11), les membranes ayant un seuil de coupure supérieur à 5 000, en ce que la fraction de l'eau qui n'a pas traversé les membranes (12) semi-perméables retourne au bac (5) de recyclage et en ce que la fraction de l'eau ayant traversé les membranes (12) est renvoyée au bassin (2), ledit procédé étant caractérisé de plus par le fait que la pression moyenne relative de l'eau circulant dans le compartiment amont (10) de l'appareil séparateur (11) est comprise entre à 0,4 et 20 bars et en ce que la vitesse de circulation de l'eau au contact des membranes (12) du compartiment amont (10) de l'appareil séparateur est comprise entre 0,3 et 5 m/s.

L'objet de la présente invention est également un appareillage pour le traitement de l'eau du bassin de piscine notamment de piscine municipale, comprenant:

- une canalisation (3) pour prélever et amener une partie de l'eau (1) du bassin (2) jusqu'à un bac (5) dit de recyclage,

- une canalisation (7) pour prélever l'eau du bac (5) et l'amener à l'entrée (9) du compartiment (10) amont d'un appareil séparateur (11) à membranes semi-perméables (12),

- une canalisation (14) pour amener la fraction de l'eau, n'ayant pas traversé les membranes (12), de la sortie (13) du compartiment (10) amont de l'appareil séparateur (11) jusqu'au bac de recyclage (5),
- une canalisation (16) pour amener la fraction de l'eau, ayant traversé les membranes (12), du compartiment aval (15) de l'appareil séparateur jusqu'au bassin (2).
- une pompe (4) sur la canalisation (3), une pompe (8) sur la canalisation (7), ces pompes étant asservies à un dispositif à niveau haut (17) et à niveau has (19) prévu sur le bac (5) de recyclage,
caractérisé en ce qu'il comprend une vanne de réglage (29) permettant d'ajuster la pression souhaitée dans le compartiment amont (10) de l'appareil séparateur (11) à membranes (12), et en ce qu'il comprend un débitmètre (30) placé sur la canalisation (16) d'évacuation de l'ultrafiltrat, ledit débitmètre (30) participant à la régulation de la pression de l'eau dans le compartiment amont (10) de l'appareil séparateur, grâce une vanne de réglage (29), située sur la canalisation (14) en aval de l'appareil séparateur (11), qui est asservie audit débitmètre (30).

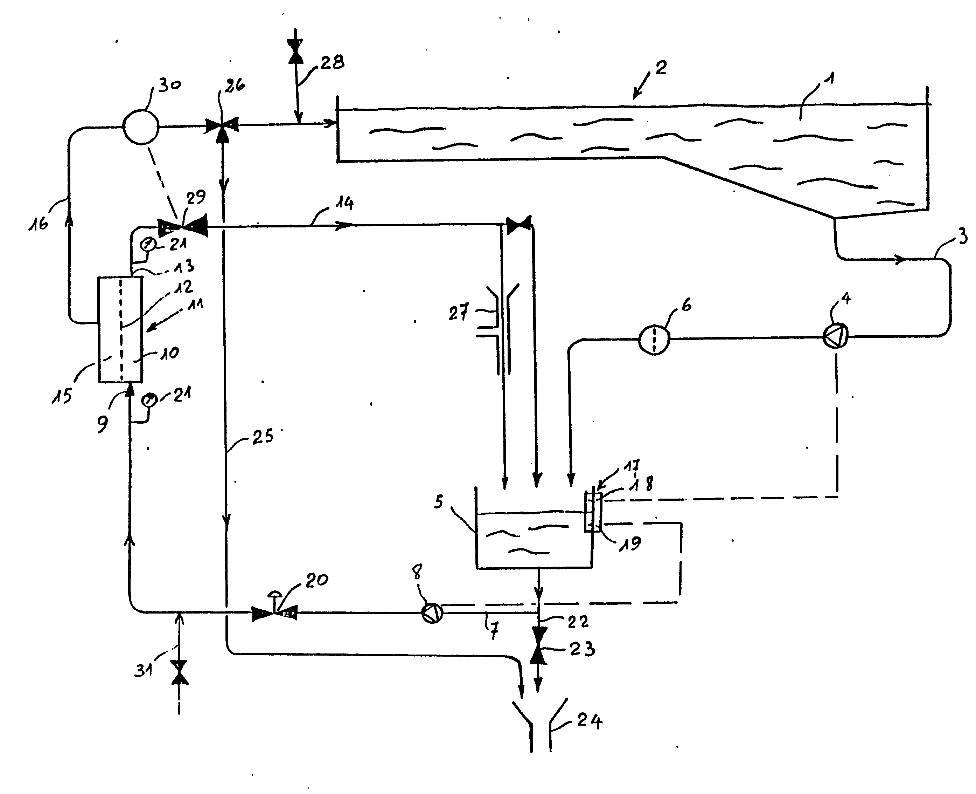

La description du procédé et de l'appareillage selon la présente invention sera mieux comprise à l'aide de la figure ci-jointe, illustrant à titre d'exemple non limitatif et sans échelle déterminée, un mode de réalisation de l'invention.

Pour la mise en oeuvre du procédé selon la présente invention on peut opérer de la façon suivante, en se référant plus particulièrement à la figure représentant un mode de réalisation de l'appareillage.

L'eau (1) du bassin (2) de la piscine est soutirée par la canalisation (3) grâce à la pompe (4). Cette canalisation (3) va jusqu'au bac (5), dit de recyclage, dans lequel se jette l'eau soutirée par ladite canalisation (3). Avantageusement cette eau subit une filtration grossière avant de se jeter dans le bac (5). Pour cela un filtre (6) est prévu sur la canalisation (3) pour éliminer des matières telles que par exemple des cheveux. Ce filtre (6) peut par exemple être un filtre classique à grille courbe à fentes transversales tel que ceux commercialisés par la Société DORR OLIVER ou par la Société PHILIPPE. L'eau contenue dans le bac (5) est soutirée dans la canalisation (7) grâce à une pompe (8), ladite canalisation (7) arrivant à l'entrée (9) du compartiment amont (10) d'un appareil séparateur (11) à membrane (12) semi-perméables. L'eau circule au contact de la membrane (12) à l'intérieur du compartiment (10) de l'appareil (11) et la fraction de l'eau qui n'a pas traversé la membrane (12) sort du compartiment amont (10) par la sortie (13) et retourne au bac (5) de recyclage grâce à la canalisation (14). La fraction de l'eau traversant la membrane (12) passe dans le compartiment aval (15) du séparateur (11) et est envoyée dans l'eau (1) du bassin (2) de la piscine grâce à la canalisation (16).

Comme cela est représenté sur la figure, le bac (5) comprend avantageusenent un dispositif (17) électrique régulateur du niveau d'eau, ledit dispostif (17) arrêtant la rotation de la pompe (4) lorsque le point haut (18) est atteint, pour qu'il n'y ait pas de débordement du bac, tandis qu'il arrête la pompe (8) lorsque le niveau d'eau dans le bac (5) atteint le point bas (19), pour éviter que le module (11) ne contienne pas de liquide. Dans la suite de la description l'appareil séparateur (11) à membrane (12) semi-perméable sera également appelé "séparateur" ou "module".

D'autre part une vanne de protection (20) à ouverture progressive est disposée sur la canalisation (7) tandis que des manomètres (21) permettent de mesurer la pression relative dans le compartiment amont (10) de l'appareil séparateur (11).

Dans le but de rendre automatique le procédé, une vanne de réglage (29) est disposée en aval de l'appareil séparateur (11) sur la canalisation (14), cette vanne étant asservie (par des moyens électriques connus) à un débitmètre (30) prévu sur la canalisation (16) de récupération de l'eau ayant traversé la membrane (12) et retournant au bassin (2). Lorsqu'en cours de traitement le débit d'ultrafiltration choisi baisse dans la canalisation (16), par suite de colmatage de la membrane, le débitmètre (30) agit sur la vanne de réglage (29) et la ferme un peu pour que la pression transmembranaire augmente dans le module (11) et qu'ainsi le débit d'ultrafiltration augmente pour revenir à la valeur souhaitée. Pour être certain toutefois que la pression dans le module n'atteigne pas des pressions trop fortes, il suffit de choisir une pompe (8) adéquate.

Pour vidanger le bac (5) lorsque cela est nécessaire une canalisation (22) peut être en communication avec la canalisation (7), cette canalisation (22) comportant une vanne (23) et se jetant à l'égout (24). De même pour le lavage ou décolmatage de la membrane (12) semi-perméable lorsque cette dernière a perdu de ses propriétés ultrafiltrantes, on peut prévoir une canalisation (25) en communication avec la canalisation (16) par une vanne trois voies (26), cette canalisation (25) se jetant par exemple à l'égout comme cela est représenté. A titre de variantes cette canalisation (25) peut se jeter dans le bac (5) de recyclage, tandis que la canalisation (22) peut être reliée directement au bac (5).

Il peut être d'autre part avantageux de prévoir sur la canalisation (14), avant que cette dernière se jette dans le bac (5), un dispositif (27) aérateur connu en soi, pour introduire de l'air dans l'eau avant qu'elle se déverse dans le bac de recyclage. Ainsi l'air entraîné par le dispositif (27) est à la fois dissous et à la fois à l'état de bulles dispersées lorsque l'eau de la canalisation (14) se jette dans le bac de recyclage. Ce dispositif (27), connu sous le nom de trompe à eau, de venturi, de mélangeur gaz-liquide, est par exemple décrit dans le brevet français 2.430.451 de la Société Rhône-Poulenc. A titre de variante le dispositif (27) peut être remplacé par un dispositif (31) d'injection d'air sous pression, disposé en amont de l'appareil séparateur (11), comme représenté sur la figure. Ce dispositif (31) permet notamment d'atténuer, dans le temps, le colmatage des membranes.

Dans certains cas il peut être avantageux, par mesure de sécurité, d'introduire de petites quantités d'un produit désinfectant tel que par exemple du chlore ou de l'ozone, dans l'eau, ayant passé à travers la membrane (12) semi-perméable de l'appareil séparateur, avant qu'elle soit introduite dans le bassin (2) de la piscine. Pour cela on prévoit une canalisation (28) en communication avec la canalisation (16). L'ajout de ce produit désinfectant a essentiellement pour but de maintenir l'eau du bassin à un certain degré de pureté biologique vis à vis des impuretés pouvant être amenées par les utilisateurs du bassin, car l'eau ultrafiltrée stérile en provenance de l'appareil séparateur (11) est exempte de tous germes bactériologiques. A titre de comparaison on introduit par la canalisation (28) généralement 0,4 à 1,4 ppm (parties par million) de chlore ou une quantité équivalente d'ozone, tandis que dans les procédés classiques de traitement de l'eau par filtration sur sable ou sur diatomées on introduit 2 à 10 ppm de chlore.

Les appareils séparateurs (11) utilisables pour la mise en oeuvre du procédé selon la présente invention sont de tous types connus. Ils peuvent comprendre des membranes planes, éventuellement enroulées en spirales, des fibres creuses, des membranes tubulaires... A titre d'exemples d'appareils séparateurs (11) à membranes semi-perméables on peut citer ceux brevetés par la Société RHONE-POULENC par ses brevets 2.127.155, 2.141.417, 2.165.042, 2.392.696, 2.400.380 et 2.471.507. A titre d'exemples d'appareils séparateurs (11) à membranes semi-perméables sous forme de fibres creuses on peut citer les appareils décrits dans les brevets français 2.193.633, 2.214.502, 2.231.421 et 2.236.537. A titre d'exemple d'appareils séparateurs (11) à membranes tubulaires on peut citer celui décrit dans le brevet français 2.294.730.

Les membranes (12) utilisées pour la mise en oeuvre du procédé selon la présente invention peuvent être des membranes isotropes (ou homogènes, ou symétriques), mais plus avantageusement on utilise des membranes anisotropes. A titre d'exemples on peut citer les membranes semi-perméables décrites dans les brevets français 1.589 659, 2.144.922, 2.040.950, 2.079.699 et 2.331.602.

Lorsque ces membranes sont sous forme anisotropes, elles possèdent une peau assurant la semi-perméabilité (ou permisélectivité), dont l'épaisseur est généralement comprise entre 0,1 et 5 microns, et une couche poreuse non semi-perméable, dont l'épaisseur est généralement comprise entre 50 et 300 microns, de préférence entre 100 et 200 microns. La couche poreuse, dite couche de support (ou substrat), dont le diamètre des pores est généralement compris entre 1 et 20 microns, donne les propriétés mécaniques de telles nembranes, et offre une résistance modérée à l'écoulement des fluides. La peau, ou couche d'arrêt, a des pores dont le diamètre est compris généralement entre 0,001 (10 Å) et 0,1 micron (1000 Å), de préférence entre 0,005 micron (50 Å) et 0,05 micron (500 Å).

Lorsque ces membranes sont sous forme isotropes ou homogènes, elles sont microporeuses, le diamètre des pores étant généralement compris entre 0,005 et 0,1 micron, de préférence entre 0,01 et 0,05 micron.

Avantageusement les membranes, homogènes ou anisotropes, peuvent être renforcées par un tissu par exemple en polyamide (NYLON) ou en polytéréphtalate d'éthylène glycol (TERGAL), ou par un non tissé, par exemple en polytéréphtalate d'éthylène-glycol (BIDIM).

Les membranes utilisées ont avantageusement un seuil de coupure compris entre 5.000 et 500.000 de préférence entre 10.000 et 100.000. Par seuil de coupure on désigne le poids moléculaire limite approximatif de protéines à partir duquel les dites protéines sont retenues par la membrane à plus de 95 % en poids.

Le débit d'ultrafiltration à l'eau des membranes sous 1 bar de pression differentielle est généralement supérieur à 100 l/m$^2$h (litres par mètre carré et par heure). Les membranes sont choisies de façon telle qu'elles permettent d'obtenir le plus grand débit d'ultrafiltration possible tout en retenant au maximum les germes, bactéries, micromismes et autres matières en suspension afin que l'eau sortant de la canalisation (16) pour entrer dans le bassin (2) soit stérile et exempte de matières en suspension.

La vitesse de circulation de l'eau dans le compartiment amont (10) de l'appareil séparateur (11) est généralement comprise entre 0,3 et 5 m/s (mètre par seconde) de préférence entre 0,5 et 3 m/s. Le débit de l'eau entre le bac (5) et l'entrée (9) du compartiment amont (10) de l'appareil séparateur (11) est généralement 5 à 20 fois, de préférence 7 à 15 fois, supérieur à celui de l'eau passant à travers les membranes semi-perméables (12) dans le compartiment aval (15).

D'autre part la différence de pression moyenne entre les compartiments amont (10) et aval (15) dans l'appareil séparateur (11) est généralement comprise entre 0,4 et 20 bars, de préférence entre 0,5 et 5 bars, la pression du compartiment (15) aval étant aussi voisine que possible de celle de la pression atmosphérique.

Avec l'appareillage et le procédé selon la présente invention il a été constaté qu'il est possible de traiter par heure, des quantités bien moindres de l'eau (1) du bassin (2) tout en lui assurant une bonne qualité, vis à vis des procédés de l'art antérieur par filtration sur sable ou sur diatomées. A titre de comparaison, il est possible de traiter des volumes d'eau (1) du bassin (2) 5 à 25 fois plus petites, de préférence 7 à 15 fois inférieures, que ceux traités avec les procédés de l'art antérieur, tout en assurant à l'eau (1) du bassin (2) une qualité égale ou même supérieure.

En ce qui concerne le volume du bac de recyclage (5) ses dimensions ne sont pas critiques. On peut par exemple utiliser un bac (5) d'environ 2 m³ pour des bassins (2) de piscine contenant 400 à 1.800 m³ d'eau.

Bien entendu au cours du traitement de l'eau (1) du bassin (2) de la piscine, le débit d'ultrafiltration des membranes semi-perméables (12) peut baisser au cours du temps. Il est alors nécessaire de procéder au lavage des membranes pour qu'elles retrouvent leurs propriétés ultrafiltrantes, c'est-à-dire que le débit du fluide les traversant s'améliore. On peut par exemple laver les membranes avec une solution agueuse d'EDTA (acide d'éthylénediamine tétracétique) à 1 % et de soude à 2 % (en poids), puis les rincer avec une solution nitrique aqueuse à pH 4. Au lieu de procéder au lavage avec les solutions d'EDTA et de soude, on peut faire des lavages à l'eau javellisée, par exemple à 0,1 degré chlorométrique. Lorsqu'on procède aux lavage et rinçge, la pompe (4) a été préalablement arrêtée, tandis que la vanne à trois voies (25) a été mise en position pour que le liquide traversant la membrane (12) passe par la canalisation (25). Avant de vider à l'égout (24) le bac (5) de recyclage dans lequel les produits n'ayant pas traversé la membrane (12) ont été concentrés au cours du traitement de l'eau (1) du bassin (2), on peut tuer les bactéries, microbes ou autres germes par l'ajout de poisons de tels produits, par exemple par ajout de Javel. Evidemment lorsqu'on procède à la vidange du bac (5), le système (17) de trop-plein est arrêté, de même que la pompe (8), tandis que la vanne (23) est ouverte. Puis, après avoir fermé la vanne (23), les produits de lavage des membranes (12) sont introduits dans le bac (5) et on met alors en marche la pompe (8). Si l'on veut que les fractions des liquides de lavage et de rinçage traversant la membrane (12) soient recyclées, on peut faire arriver la canalisation (25) dans le bac (5).

Avec l'appareillage décrit ci-avant, correspondant à celui de la figure jointe, il a été possible de traiter en continu l'eau (1) du bassin (2) d'une piscine municipale de 400 m³, ce bassin ayant le tiers de sa surface à une profondeur inférieure à 1,5 m et les deux tiers restant à une profondeur supérieure à 1,5 m (sans bassin de plongeon). Avec les procédés classiques de filtration sur diatomées il faut traiter les 400 m³ du bassin (2) en trois heures, ce qui impose un débit de 133 m³/h (mètres cubes par heure) dans le circuit externe de traitement. De plus il faut ajouter de 2 à 10 ppm de chlore dans le bassin (2) pour assurer une bonne pureté bactériologique et biologique. En utilisant l'appareillage selon la présente invention il a été possible de traiter le même volume (400 m³) d'eau (1) du bassin (2) en 36 h 30 mn, c'est-à-dire avec un débit de sortie de l'eau (1) dans la canalisation (3) de 15 m³/h. Le bac (5) de recyclage avait une contenance de 2 m³ et l'appareil séparateur (11) consistait en deux modules plans à membranes semi-perméables (12) commercialisés par la Société Rhône-Poulenc sous la dénomination "PLEIADE UFP 70". Ces deux modules, montés en parallèle, avaient chacun 50 m² de surface utile de membranes semi-perméables et permettaient d'avoir un débit d'ultrafiltration totale de 15 m³/h. Chacun des modules ou appareils séparateurs (11) comprenait des plaques-supports de membranes, ces dernières formant 6 sous-ensembles (de 24 plaques-supports chacun) dans lesquels l'eau à traiter circulait en parallèle entre les membranes de deux plaques-supports consécutives, l'eau à traiter circulant en série d'un sous-ensemble à l'autre. Les membranes équipant ces modules étaient celles commercialisées par la Société Rhône-Poulenc sous la dénomination IRIS 3038. Ces membranes anisotropes ont une épaisseur totale de 160 microns et sont renforcées par un tissu à base de crin en polyamide. Elles ont une couche d'arrêt de 0,4 micron d'épaisseur et dont le diamètre des pores est compris entre 50 et 200 Å (1 A = $10^{-10}$m). Ces membranes sont obtenues à partir d'un terpolymère à base d'acrylonitrile, de méthacrylate de méthyle (≈ 7 % en poids) et de méthallylsulfonate de sodium, ce terpolymère ayant une capacité ionique comprise entre 70 et 80 meq/Kg (milli-équivalent par kilogramme) et une viscosité spécifique de 0,35 à 20°C en solution à 2 g/l dans le diméthylformamide. Ces membranes peuvent supporter des pH compris entre 1 et 12, ainsi qu'une température de 50°C. Leur débit d'ultrafiltration est de 400 l/m²h à l'eau pure sous une pression différentielle de 1 bar à 20°C. Leur seuil de coupure est compris entre 15.000 et 20.000, ce seuil de coupure correspondant au poids moléculaire limite approximatif de protéine à partir duquel lesdites protéines sont retenues par les membranes à raison de plus de 95 % en poids.

Le débit de l'eau circulant dans chaque appareil séparateur (11) était de 70 m³/h, la vitesse de l'eau au contact des membranes (12) étant de 2 m/s. La pression moyenne relative des compartiments "amont" (10) des appareils séparateurs (11) a été maintenue à une valeur comprise entre 1,5 et 2,5 bars au fur et à mesure du traitement, l'accroissement de pression correspondant à un encrassement des membranes (12) dans le temps.

L'eau obtenue dans les compartiments "aval" (15) des appareils séparateurs (11) était exempte de microorganismes et de matières en suspension.

Il suffit d'ajouter 0,5 ppm de chlore dans l'eau (1) du bassin (2) par la canalisation (28).

En cours de traitement il s'est avéré qu'une fois par semaine on pouvait procéder à un décolmatage des membranes (12). Il suffit pour cela de faire un lavage avec 1 m³ d'eau javellisée à 0,1 degré chloromètrique, pendant 30 minutes suivi d'un lavage par 1 m² d'acide nitrique à pH 4 pendant 30 minutes.

On effectue ensuite un rinçge par 1 m d'eau en

## Revendications

1. Procédé pour le traitement de l'eau contenue dans le bassin de piscine, notamment de piscine municipale, caractérisé en ce que l'on soutire en continu l'eau (1) dudit bassin (2) pour l'envoyer dans un bac (5) de recyclage, en ce que l'on soutire l'eau dudit bac (5) pour l'envoyer au contact des membranes (12) semi-perméables d'un appareil séparateur (11), les membranes ayant un seuil de coupure supérieur à 5 000, en ce que la fraction de l'eau qui n'a pas traversé les membranes (12) semi-perméables retourne au bac (5) de recyclage et en ce que la fraction de l'eau ayant traversé les membranes (12) est renvoyée au bassin (2), ledit procédé étant caractérisé de plus par le fait que la pression moyenne relative de l'eau circulant dans le compartiment amont (10) de l'appareil séparateur (11) est comprise entre à 0,4 et 20 bars et en ce que la vitesse de circulation de l'eau au contact des membranes (12) du compartiment amont (10) de l'appareil séparateur est comprise entre 0,3 et 5 m/s.

2. Procédé selon la revendication 1, caractérisé en ce que les membranes ont un seuil de coupure compris entre 10 000 et 100 000, en ce que la pression moyenne relative de l'eau circulant dans le compartiment amont (10) de l'appareil séparateur (11) est comprise entre à 0,5 et 5 bars et en ce que la vitesse de circulation de l'eau au contact des membranes (12) du compartiment amont (10) de l'appareil séparateur (11) est comprise entre 0,5 et 3 m/s.

3. Procédé selon l'une quelconque des revendications précédentes, caractérisé en ce que lorsque le débit des membranes semi-perméables n'est plus suffisant, on procéde à leur décolmatage après avoir auparavant tué les bactéries, microbes ou autres germes accumulés dans le bac (5) de recyclage puis vidé ce dernier (5) à l'égout.

4. Procédé selon l'une quelconque des revendications précédentes, caractérisé en ce que la pression de l'eau à traiter dans le compartiment amont (10) de l'appareil séparateur (11) est régulée en fonction d'un débitmètre (30) placé sur la canalisation (16) d'évacuation de l'ultrafiltrat, une vanne de réglage (29), située sur la canalisation (14) en aval de l'appareil séparateur (11), étant asservie à ce débitmètre (30).

5. Appareillage pour le traitement de l'eau du bassin de piscine, notamment de piscine municipale, comprenant:
- une canalisation (3) pour prélever et amener une partie de l'eau (1) du bassin (2) jusqu'à un bac (5) dit de recyclage,
- une canalisation (7) pour prélever l'eau du bac (5) et l'amener à l'entrée (9) du compartiment (10) amont d'un appareil séparateur (11) à membranes semi-perméables (12),
- une canalisation (14) pour amener la fraction de l'eau, n'ayant pas traversé les membranes (12), de la sortie (13) du compartiment (10) amont de l'appareil séparateur (11) jusqu'au bac de recyclage (5),
- une canalisation (16) pour amener la fraction de l'eau, ayant traversé les membranes (12), du compartiment aval (15) de l'appareil séparateur jusqu'au bassin (2).
- une pompe (4) sur la canalisation (3), une pompe (3) sur la canalisation (7), ces pompes étant asservies à un dispositif à niveau haut (17) et à niveau bas (19) prévu sur le bac (5) de recyclage,
caractérisé en ce qu'il comprend une vanne de réglage (29) permettant d'ajuster la pression souhaitée dans le compartiment amont (10) de l'appareil séparateur (11) à membranes (12), et en ce qu'il comprend un débitmètre (30) placé sur la canalisation (16) d'évacuation de l'ultrafiltrat, ledit débitmètre (30) participant à la régulation de la pression de l'eau dans le compartiment amont (10) de l'appareil séparateur, grâce une vanne de réglage (29), située sur la canalisation (14) en aval de l'appareil séparateur (11), qui est asservie audit débitmètre (30).

6. Appareillage selon la revendication 5, caractérisé en ce qu'il comprend une canalisation (22) de vidange du bac (5) et une canalisation (25) permettant au liquide ayant traversé les membranes lors de leur décolmatage de retourner au bac (5) ou d'être évacué à l'égout.

7. Appareillage selon l'une quelconque des revendications 5 à 6, caractérisé en ce qu'il comprend sur la canalisation (14) un dispositif (27) permettant d'introduire de l'air dans l'eau avant qu'elle retourne dans le bac (5).

8. Appareillage selon l'une quelconque des revendications 5 à 7 caractérisé en ce qu'il comprend une canalisation (31) d'introduction d'air en amomt de l'appareil séparateur (11).

9. Appareillage selon l'une quelconque des revendications 5 à 8, caractérisé en ce que les membranes (12) semi-perméables utilisées sont de préférence des membranes anisotropes dont le seuil de coupure est supérieur à 5.000, de préférence compris entre 10.000 et 100.000.

## Patentansprüche

1. Verfahren zur Behandlung von Wasser, das in dem Bassin eines Schwimmbades, insbesondere eines städtischen Schwimmbades, enthalten ist, dadurch gekennzeichnet, daß man das Wasser (1) aus diesem Bassin (2) kontinuierlich abzieht, um es in ein Rückführungsbecken (5) zu schicken, daß man das Wasser aus diesem Becken (5) abzieht, um es in Kontakt mit den semipermeablen Membranen (12) einer Trennvorrichtung (11) zu schicken, wobei die Membranen eine Trennschwelle oberhalb 5000 haben, daß man die Fraktion des Wassers, das die semipermeablen Membranen (12) nicht durchquert hat, zum Rückführungsbecken (5) zurücklenkt, und daß die Fraktion des Wassers, das die Membrenen (12) durchquert hat, zum Bassin (2) zurückgeschickt wird, und dieses Verfahren weiterhin dadurch gekennzeichnet ist, daß der mittlere relative Druck des Wassers, das in dem Abteil (10) oberhalb der Trennvorrichtung (11) zirkuliert, zwischen 0,4 und 20 bar liegt, und daß die Zirkulationsgeschwindigkeit des Wassers in Kontakt mit den Membranen (12) des Abteils (10) stromaufwärts der Trennapparatur zwischen 0,3 und 5 m/sec. beträgt.

2. Verfahren gemäß Anspruch 1, dadurch gekennzeichnet, daß die Membranen eine Trennschwelle zwischen 10 000 und 100 000 haben, daß der mittlere relative Druck des Wassers, das in dem Abteil (10) stromaufwärts der Trennapparatur (11) zirkuliert, zwischen 0,5 und 5 bar beträgt, und daß die Zirkulationsgeschwindigkeit des Wassers bei der Berührung mit den Membranen (12) des Abteils (10) stromaufwärts der Trennapparatur zwischen 0,5 und 3 m/sec. beträgt.

3. Verfahren gemäß einem der vorhergehenden Ansprüche, dadurch gekennzeichnet, daß, falls die Leistung der semipermeablen Membranen nicht mehr ausreichend ist, man zu ihrer Entschlammung bzw. Ausspülen schreitet, nachdem man zuvor die Bakterien, Mikroben oder anderen Keime, die sich in dem Rückführungsbecken (5) angesammelt haben, abgetötet hat, und das letztere (5) in die Kanalisation entleert hat.

4. Verfanren gemäß einem der vorhergehenden Ansprüche, dadurch gekennzeichnet, daß der Druck des zu behandelnden Wassers in dem Abteil (10) stromaufwärts der Trennapparatur (11) aufgrund eines Durchflußmessers (30) reguliert wird, der auf der Abwasserleitung (16) des Ultrafiltrats angeordnet ist, wobei ein Regulierschieber (29), der auf der Abwasserleitung (14) stromabwärts der Trennapparatur (11) angeordnet ist, von diesem Durchflußmesser (30) gesteuert wird.

5. Vorrichtung zur Behandlung des Wassers eines Schwimmbadbassins, insbesondere eines städtischen Schwimmbades, umfassend:
- eine Leitung (3) um einen Teil des Wassers (1) aus dem Bassin (2) zu entnehmen und bis zu einem Rücklaufbecken (5) zu führen,
- eine Leitung (7), um das Wasser aus dem Becken (5) zu entnehmen und es zum Einlaß (9) des Abteils (10) stromaufwärts einer Trennapparatur (11) mit semipermeablen Membranen (12) zu führen,
- eine Leitung (14), um diejenige Fraktion des Wassers, das die Membranen (12) nicht durchquert hat, vom Ausgang (13) des Abteils (10) stromaufwärts der Trennapparatur (11) zum Rückführungsbecken (5) zu führen.
- eine Leitung (16), um diejenige Fraktion des Wassers, das die Membranen (12) durchquert hat, aus dem Abteil (15) stromabwärts der Trennapparatur bis zum Bassin (2) zu führen,
- eine Pumpe (4) auf der Leitung (3), eine Pumpe (8) auf der Leitung (7), wobei diese Pumpen durch eine Vorrichtung oberhalb (17) und unterhalb (19) des Niveaus, die auf dem Rückführungsbecken (5) vorgesehen ist, gesteuert werden, dadurch gekennzeichnet, daß sie einen Regulierschieber (29) hat, der es ermöglicht, den gewünschten Druck in dem Abteil (10) stromaufwärts der Trennapparatur (11) mit Membranen (12) einzustellen, daß sie einen Durchflußmesser (30) hat, der auf der Abwasserleitung (16) des Ultrafiltrats angeordnet ist, wobei dieser Durchflußmesser (30) an der Steuerung des Drucks des Wassers in dem Abteil (10) stromaufwärts der Trennapparatur aufgrund eines Regulierschiebers (29) teilnimmt, der auf der Leitung (14) stromabwärts der Trennapparatur (11) angeordnet ist, der von dem genannten Durchflußmesser (30) gesteuert wird.

5. Vorrichtung gemäß Anspruch 5, dadurch gekennzeichnet, daß sie eine Entleerungsleitung (22) für das Becken (5) und eine Leitung (25) aufweist, die es der Flüssigkeit, welche die Membranen durchquert hat, ermöglicht, während ihres Ausspülens zum Becken (5) zurückzukehren oder zur Kanalisation entleert zu werden.

7. Vorrichtung gemäß einem der Ansprüche 5 bis 6, dadurch gekennzeichnet, daß sie auf der Leitung (14) eine Vorrichtung (27) aufweist, die es ermöglicht, Luft in das Wasser einzuführen, bevor es in das Becken (5) zurückkehrt.

8. Vorrichtung gemäß einem der Ansprüche 5 bis 7, dadurch gekennzeichnet, daß sie eine Lufteinführungsleitung (31) stromaufwärts der Trennapparatur (11) aufweist.

9. Vorrichtung gemäß einem der Ansprüche 5 bis 7, dadurch gekennzeicnnet, daß die verwendeten semipermeablen Membranen (12) vorzugsweise anisotrope Membranen sind, deren Trennschwelle oberhalb 5000, vorzugsweise zwischen 10 000 und 100 000, liegt.

## Claims

1. Process for treating the water contained in a swimming pool, especially a municipal swimming pool, characterized in that the water (1) is drawn off continuously from the said pool (2) and is conveyed into a recycling tank (5), in that the water is drawn off from the said tank (5) and is brought into contact with the semipermeable membranes (12) of a separator apparatus (11), the membranes having a cut-off threshold higher than 5,000, in that the fraction of water which has not passed through the semipermeable membranes (12) returns to the recycling tank (5), and in that the fraction of the water which has passed through the membranes (12) is returned to the pool (2), the said process also being characterized in that the mean relative pressure of the water circulating in the upstream compartment (10) of the separator apparatus (11) is between 0.4 and 20 bars, and in that the rate of circulation of the water in contact with the membranes (12) of the upstream compartment (10) of the separator apparatus is between 0.3 and 5 m/s.

2. Process according to Claim 1, characterized in that the membranes have a cut-off threshold between 10,000 and 100,000, in that the mean relative pressure of the water circulating in the upstream compartment (10) of the separator apparatus (11) is between 0.5 and 5 bars, and in that the rate of circulation of the water in contact with the membranes (12) in the upstream compartment (10) of the separator apparatus (11) is between 0.5 and 3 m/s.

3. Process according to either of the preceding claims, characterized in that, when the throughput of the semipermeable membranes is no longer sufficient, they are cleaned after the bacteria, microbes or other germs accumulated in the recycling tank (5) have previously been killed and the recycling tank (5) has then been drained.

4. Process according to any one of the preceding claims, characterized in that the pressure of the water to be treated in the upstream compartment (10) of the separator apparatus (11) is regulated as a function of a flowmeter (30) located on the ultrafiltrate discharge pipe (16), and a regulating valve (29) located in the pipe (14) downstream of the separator apparatus (11) is under the control of this flowmeter (30).

5. Installation for treating the water in a swimming pool, especially a municipal swimming pool, comprising:
- a pipe (3) for drawing off some of the water (1) in the pool (2) and conveying it to a so-called recycling tank (5),
- a pipe (7) for drawing off the water from the tank (5) and conveying it to the inlet (9) of the upstream compartment (10) of a separator apparatus (11) containing semipermeable membranes (12),
- a pipe (14) for conveying the fraction of the water which has not passed through the membranes (12) from the outlet (13) of the upstream compartment (10) of the separator apparatus (11) to the recycling tank (5),
- a pipe (16) for conveying the fraction of the water which has passed through the membranes (12) from the downstream compartment (15) of the separator apparatus to the pool (2),
- a pump (4) in the pipe (3) and a pump (8) in the pipe (7), these pumps being under the control of a high-level device (17) and a low-level device (19) which are provided in the recycling tank (5),
characterized in that it possesses a regulating valve (29) making it possible to set the desired pressure in the upstream compartment (10) of the separator apparatus (11) with membranes (12), and in that it posseses a flowmeter (30) located in the ultrafiltrate discharge pipe (16), the said flowmeter (30) participating in regulating the pressure of the water in the upstream compartment (10) of the separator apparatus by means of a regulating valve (29) which is located in the pipe (14) downstream of the separator apparatus (11) and which is under the control of the said flowmeter (30).

6. Installation according to Claim 5, characterized in that it includes a pipe (22) for draining the tank (5) and a pipe (25) making it possible for the liquid which has passed through the membranes during the cleaning of the latter to return to the tank (5) or be drained off.

7. Installation according to either one of Claims 5 and 6, characterized in that it includes, in the pipe (14), a device (27) making it possible to introduce air into the water before it returns to the tank (5).

8. Installation according to any one of Claims 5 to 7, characterized in that it includes a pipe (31) for introducing air upstream of the separator apparatus (11).

9. Installation according to any one of Claims 5 to 8, characterized in that the semipermeable membranes (12) used are preferably anisotropic membranes, the cut-off threshold of which is higher than 5,000 and is preferably between 10,000 and 100,000.

0 125 192